# EUROPEAN PATENT APPLICATION

(11) **EP 4 369 213 A1**
(43) Date of publication of application: **15.05.2024**
(21) Application number: 22206234.1
(22) Date of filing: 08.11.2022
(51) Int. Cl.: G06F 16/20, G06Q 10/00

(54) **TAXONOMIES IN PROCESS MINING**

(71) Applicant: Celonis SE, 80333 München (DE)
(72) Inventor: van der Aalst, Wil, 80333 München (DE)
(74) Representative: 2s-ip Schramm Schneider Bertagnoll Patent- und Rechtsanwälte Part mbB

(57) **Abstract**

Provided is a computer-implemented method to generate an object-centric data model of recorded process data, wherein each object is assigned to exactly one object type and each event is assigned to exactly one event type. The method comprises providing at least one first taxonomy, wherein each object type comprises a first pointer to at least one class per each first taxonomy. Preferably, each event type similarly comprises a second pointer to at least one class per each second taxonomy.

Each class enforces the presence of a number of attributes for each corresponding type. Due to their hierarchical structure, taxonomies allow for an aggregation at type level. Further, taxonomies enable a reuse of types, since the respective type definitions are abstracted to at least one class per taxonomy.

## Description

### Field of the invention

The present invention relates to a computer-implemented method to generate an object-centric data model of recorded process data, wherein the object-centric data model captures the hierarchy of its object types and event types.

### Background of the invention

Processes are executed everywhere and any time. A process comprises a number of process steps and executing these process steps generates a process instance, also called case. As of today, many processes are monitored, wherein process steps are usually recorded with a number of properties in an event log.

In real-world processes, a number of object instances, or objects, participate in executing the process steps. Traditionally, the event log comprises events each referring to a single case. With introducing object-centric data models, instead, the event log may comprise events each referring to any number of objects of possibly different types. Each object is assigned to exactly one object type and each event is assigned to exactly one event type.

Traditionally, an event type is defined by an activity name, i.e., the label of a process step. In object-centric event logs, there may be multiple types of objects, and an event can refer to any number of objects. However, the type definitions in state-of-the-art data models are unstructured as these definitions rely on mere strings, such as the activity name. As a result, reuse of type definitions is difficult.

Different organizations may call the same activity or object type very different. The naming may also depend on the source system, and different subsets of attributes are used in the respective type definitions. However, extracting data from different source systems and organizations results in an inconsistent set of event types and object types. As a result, additional and often complicated steps for cleaning the extracted data are necessary in order to establish a relation between object types and event types of different source systems.

Further, the relations among object types and event types in the same object-centric data models previously known are limited to the instance level, whereas event types and/or object types as such cannot be related. Hence, today's process mining software cannot exploit any knowledge encapsulated within type definitions.

### Object of the invention

It is therefore an object of the present invention to provide a computer-implemented method that enables data models to be generated and analyzed more efficiently, thereby reducing above-introduced problems of prior art at least partially.

### Solution according to the invention

This object is solved by the computer-implemented method according to the independent claim. Further aspects of the invention and advantageous embodiments are specified in the dependent claims.

Accordingly, provided is a computer-implemented method to generate an object-centric data model of recorded process data. The recorded process data is a multidimensional data set which comprises data recorded during executions from processes and is extracted from at least one external computer system. A process comprises a number of process steps, wherein a number of object instances participate in executing the number of process steps.

The method comprises:
- providing a number of first data structures, wherein a number of attributes of each first data structure defines an object type,
- for each object type, determining a number of object instances in the recorded process data and storing each object instance in a record of the first data structure such that each object instance is assigned to exactly one object type,
- providing at least one first taxonomy, wherein each first taxonomy comprises a number of classes, wherein each class defines a number of object type attributes,
- linking each object type a number of classes, wherein each class is assigned to a different first taxonomy such that the number of attributes of the first data structure is defined by the number of classes the respective object type is linked to, and
- generating the obj ect-centric data model based on the number of first data structures.

The gist of the present invention is that at least one first taxonomy, or object taxonomy, is provided, wherein the object type definition is abstracted to a class in at least one object taxonomy. Object types therefore may be classified equally over different source systems thereby reducing data cleaning challenges and procedures.

Further, the object taxonomy comprises a number of classes, in particular object classes, which may be related to each other. As a result, also the object types as defined by corresponding object classes are related to each other, allowing for aggregations on type level. In other words, the object taxonomy is a means to capture the hierarchy at type level of an object-centric data model and represents specialization relations ("is a").

The object type attributes are attributes that define the respective object type.

Note that object instances of different object types may be related to each other. Hence, in some embodiments, at least one relationship between two corresponding first data structures is determined. The at least one relationship represents an object-to-object relationship, which is a first type of relationships in the object-centric data model, or first relationship.

The use of taxonomies is twofold. First, taxonomies may be used to guide the extraction process (i.e., set targets for the object and event factories). Second, taxonomies may be exploited in process mining tasks like process discovery and conformance checking, e.g., by clustering object instances.

Preferably, the method further comprises assigning a number of first pointers to the object type, wherein each first pointer refers to a single class of a respective first taxonomy.

Thus, the type definition for an object is decoupled from the taxonomy as the object types refer to classes of the object taxonomies by means of first pointers. The object type may refer to object classes in different object taxonomies. Note that an object type cannot refer to multiple object classes in the same object taxonomy.

Preferably, the method further comprises:
- providing a number of second data structures, wherein a number of attributes of each second data structure defines an event type,
- for each event type, determining a number of process steps in the recorded process data and storing each process step in a record of the second data structure such that each process step is assigned to exactly one event type,
- providing at least one second taxonomy, wherein each second taxonomy comprises a number of classes, wherein each class defines a number of event type attributes,
- linking each event type to a number of classes, wherein each class is assigned to a different second taxonomy such that the number of attributes of the second data structure is defined by the number of classes the respective event type is linked to,
- determining at least one relationship, wherein the relationship links a process step to an object instance, and
- generating the obj ect-centric data model based on the number of first data structures, the number of second data structures and the at least one relationship.

The at least one relationship is an event-to-object relationship, which is a relationship of a second type, or second relationship.

The second taxonomy, or event taxonomy, may be similarly specified for event types as the object taxonomy for object types. Hence, the advantages resulting from the use of object taxonomies apply similarly to the use of event taxonomies.

An event type defined through one or more event classes of respective event taxonomies therefore is defined by more attributes than just the activity name, which enables to exploit event type specializations in process mining tasks.

Preferably, the method further comprises assigning a number of second pointers to the event type, wherein each second pointer refers to a single class of a respective second taxonomy.

Thus, the type definition for an event is similarly decoupled from the taxonomy as the event types refer to classes of the event taxonomies by means of second pointers. The event type may refer to event classes in different event taxonomies. Again, an event type cannot refer to multiple event classes in the same event taxonomy.

Preferably, the first taxonomy and/or the second taxonomy comprises a tree structure, wherein the tree structure comprises a root node, a number of child nodes of the root node and a number of further child nodes of each child node, wherein in the root node, each child node and each further child node a respective class is stored in the first taxonomy or the second taxonomy, wherein each class stored in a child node or a further child node comprises an attribute in which a reference to its parent class is stored.

The tree structure of the first taxonomy and/or the second taxonomy provides a means to apply process mining to an object-centric data model at different abstraction levels. Using event taxonomies, it is possible to create higher-level process models. Using object taxonomies, it is possible to cluster object instances reliably and create specialized models for different clusters. Hence, taxonomies help to speed up analysis and improve the quality and interpretability of results.

In other words, the event taxonomy and object taxonomy provide a typing system for events and objects, respectively, wherein the types may be related to each other due to the tree structure of the event taxonomy and/or object taxonomy. As a result, the process mining software can exploit this knowledge.

Preferably, each class stored in a child node or a further child node of the specific first taxonomy and/or the specific second taxonomy is related through an inheritance relationship to its parent class.

Preferably, each class of the first taxonomy comprises a number of mandatory object type attributes and a number of optional object type attributes, wherein each class of the second taxonomy comprises a number of mandatory event type attributes and a number of optional event type attributes, wherein each class stored in a child node or a further child node of the respective first taxonomy and/or the respective second taxonomy inherits all attributes of its parent class.

In one embodiment, the method further comprises storing a scope value in at least one attribute of the first data structure, wherein the scope value comprises a pointer into an emerging hierarchical structure.

Preferably, the method further comprises storing the scope value in at least one attribute of the second data structure.

With the scope value comprising a pointer into an emerging hierarchical structure, the scope attribute provides a handle for OLAP operations on the aggregation level. The hierarchical structure does not need to be predefined but may emerge over time as new scope values are added on-the-fly.

The scope attribute is a means to capture the hierarchy at instance level of an object-centric data model as the scope values stored in the scope attribute represents a "part of'-relation. This feature enables, e.g., anonymizing process mining results by abstracting resource information, i.e., by lifting resource information to the team level.

The scope values can be used for filtering the object-centric data model and any process graph discovered from it. The emerging hierarchy of scope values directly enables the use of standard OLPA operations such as slicing, dicing, drill-downs and roll-ups for exploring the data model and/or process graph.

Preferably, the scope value is a string comprising categorical data that is separated by a delimiter.

This feature has the advantage that the OLAP operations to select the desired subset of objects or events may be implemented based on regular expressions, which may be executed very efficiently. Operations on scope values may be used to create new event logs from which new process models may be discovered.

Preferably, the method further comprises discovering a process graph from the object-centric data model, wherein the process graph is provided for an analysis of the recorded process data.

### Short summary of the figures

Exemplary embodiments of the method according to the invention as well as a number of aspects of the invention are described below in detail in combination with the figures, which show:
- Fig. 1: a flow chart summarizing the method steps to generate an object-centric data model comprising scope values;
- Fig. 2: a schematic representation of scope values according to an aspect of the invention;
- Fig. 3: a flow chart summarizing the method steps to generate an object-centric data model comprising a first taxonomy;
- Fig. 4: a schematic representation of an event taxonomy according to an aspect of the invention; and
- Fig. 5: a schematic representation of scope values for event instances in combination with an event taxonomy;

### Detailed description of the invention

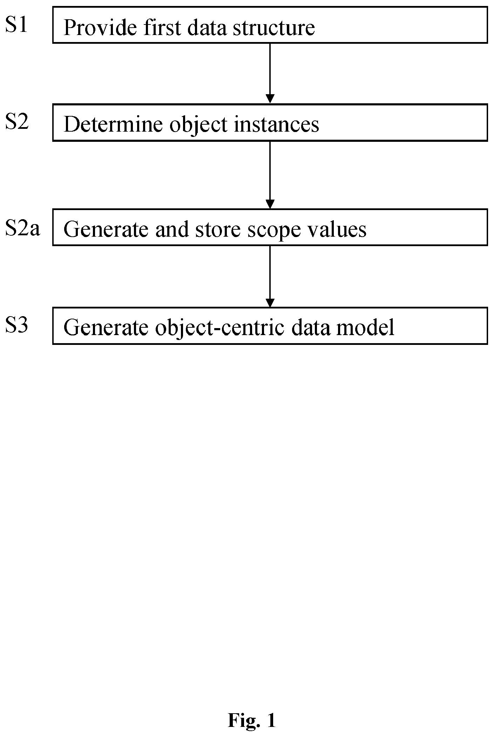

**Fig. 1** shows a flow chart summarizing the method steps to generate an object-centric data model comprising scope values.

In a first step, S1, a first data structure is provided. Preferably, the first data structure is a database table in a relational database system. The first data structure comprises a number of attributes, of which some attributes define an object type. The first data structure further comprises at least one scope attribute which may or may not be part of the object type. The definition of the object type be provided, e.g., by way of an object factory.

In a second step, S2, the object instances are determined and stored in the first data structure, e.g., by way of the object factory. In other words, the first data structure is populated by records which are transformed from raw data sources of the external source system. The records in the first data structure are object instances. The first data structure ensures that each object instance is assigned to exactly one object type.

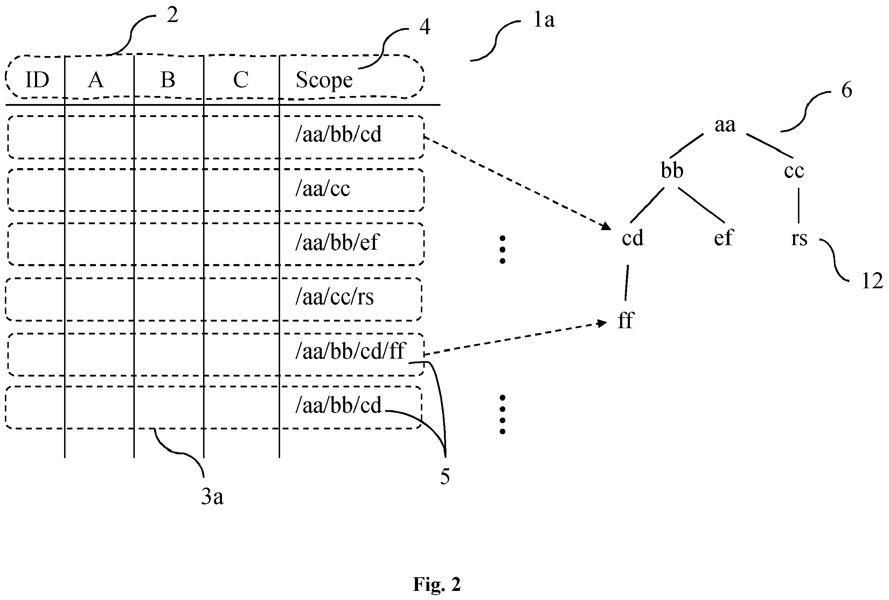

Within execution of the second step, step S2a is carried out, according to which scope values are generated and stored in the respective scope attributes of the first data structure. Specific examples are scope values are explained with respect to Fig. 2.

In a third step, S3, the object-centric data model is generated. The object-centric data model may be further extended by relationships between the first data tables, i.e., the object types, a number of second data tables related to event types and relationships between records of the second data tables to one or more records of the first data tables.

The second data table may also comprise at least one scope attribute. These scope values stored in the at least one scope attribute of a second data structure may be generated using an event factory, or event type building system. In particular, the scope values may be derived from records of the first data structure or generated from a change log, i.e., a data structure comprising change information according to a predefined format.

**Fig. 2** shows a schematic representation of scope values according to an aspect of the invention.

The exemplary first data structure 1a shown in Fig. 1 comprises a scope attribute 4 among its definition of the corresponding object type 2. In the first data structure 1a, a number of object instances 3a are stored. Each object instance 3a is sketched by a rounded dash-lined rectangle. For each object instance 3a, only the values stored in the scope attribute 4, i.e., the respective scope values 5, are represented.

In the example of Fig. 2, the scope values 5 are strings having the format of a pathname, as preferred according to an aspect of the invention. The scope values 5 of Fig. 2 are generic but represent the underlying concept: each scope value 5 points to a node 12 in an emerging hierarchical structure 6. In other words, the scope value 5 embodies a path in the emerging hierarchical structure to the corresponding node 12.

As new object instances are generated, new scope values may emerge from the transformation of the raw data stored in the external source system, wherein a new node is generated in the emerging hierarchical structure 6 and the position of the new node encoded by the corresponding new scope value.

In an analysis, the scope values 5 can be used for filtering, for example, by using regular expressions. With replacing one or more hierarchical levels in the path defined by a scope value by a wildcard character, a desired subset of object instances (or event instances, accordingly) may be selected for further analysis. Hence, the aggregation level may be changed during an analysis and is not predefined as it is for state-of-the-art object-centric data models.

In particular, the scope values 5 allow for abstraction of the corresponding object instances 3a and/or event instances 3b. For example, the scope value "/ aa/bb/cd/ff" may be lifted to "/ aa/bb/cd" or even "/aa/bb".

Specific examples for scope values may be "/World/Europe/Germany/Aachen", "/Celonis/Sales", "/project/planning", "/order123/orderline456". In particular for location-based scope values, the flexible character of the emerging hierarchical structure is of advantage, as the individual locations do not need to be specified before determining the object instances from the source data. Instead, it is sufficient to specify the logical structure for storing locations in the corresponding scope attribute, e.g., by defining level types for the emerging hierarchical structure. For the exemplary scope values "/World/Europe/Germany/Aachen" and "/World/Asia/Australia/Brisbane" the level types may be "Planet", "Continent", "Country, and "City".

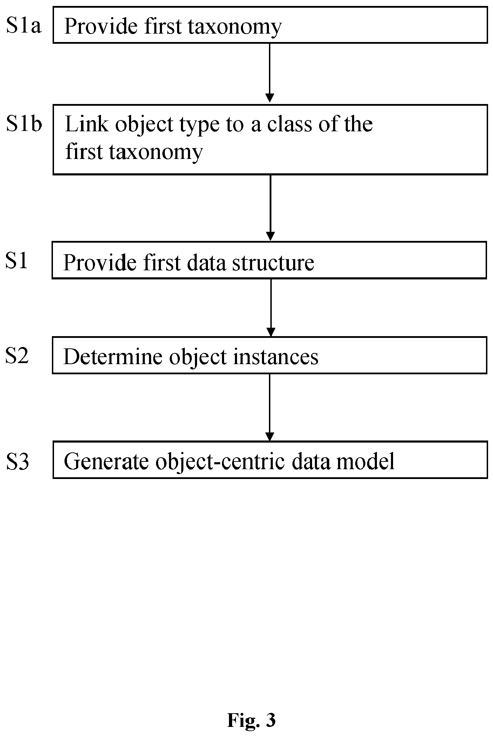

**Fig. 3** shows a flow chart summarizing the method steps to generate an object-centric data model comprising a first taxonomy.

For the generation of an object type, a first taxonomy is provided within the first step, step S1a, according to an aspect of the invention. The first taxonomy is an object taxonomy. Similarly, a second taxonomy, i.e., event taxonomy, may be provided for the generation of an event type.

In a next step, S1b, the object type is linked to a class of the first taxonomy. Each object instance has a type which is decoupled from the taxonomy to support its reuse. In the object taxonomy, a number of object classes are defined. Each object class comprises a set of attributes which are demanded for the corresponding object type. In other words, object instances transformed from the raw data of the external source system are only assigned to a specific object type if the object instance comprises all attributes of the corresponding object type definition as enforced by the object class the object type is linked to.

The first step, S1, is completed with providing the first data structure, as explained above with respect to Fig. 1. For event types, a second data structure may be provided accordingly.

In the second step, S2, the object instances are determined for the respective object type, e.g., by way of an object factory. Accordingly, event instances may be determined for a respective event type, e.g., by way of an event factory.

In the third step, S3, the object-centric data model is generated as explained above with respect to Fig. 1.

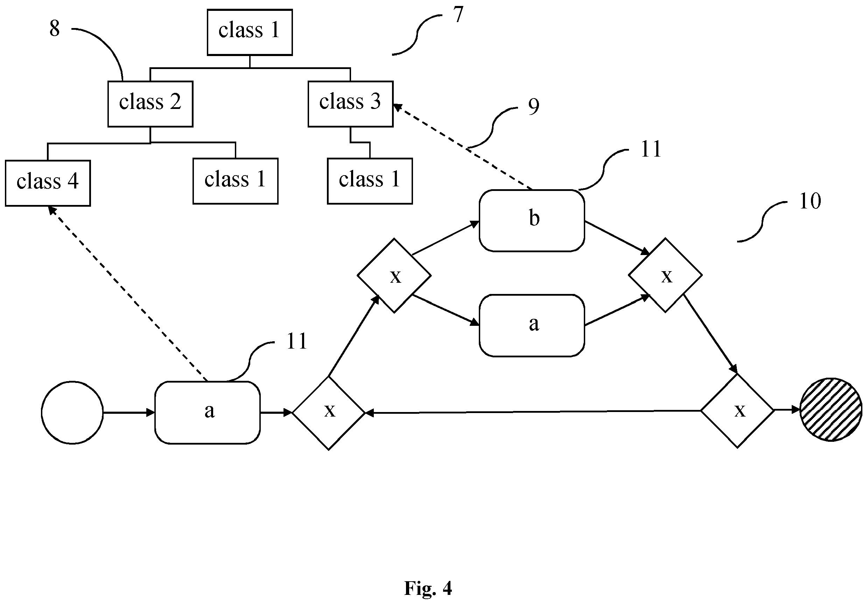

**Fig. 4** shows a schematic representation of an event taxonomy according to an aspect of the invention.

The schematic representation of Fig. 4 comprises a simplified example of a discovered process graph 10 from an object-centric data model comprising at least one second taxonomy 7. The data model may further comprise at least one first taxonomy, which is not shown in Fig. 4 to keep the focus on the core concept of taxonomies in process mining. Note that a type cannot refer to multiple classes in the same taxonomy.

The process graph 10 comprises a start node, which is represented by an open circle, and which represents an object type. Object instances of the object type are processed according to the process graph 10 by event instances of type "a" before reaching a gateway node, which is labeled by an "x". Eventually, the object instances of the object type terminate at the end node, which is represented by a shaded circle.

Each event type 11 is linked to an event class 8 of the event taxonomy 7 by a second pointer 9. The event type "a", e.g., is linked to the event class "class 4". The event type "b", e.g., is linked to the event class "class 3". Correspondingly, the object type may be linked to an object class of at least one object taxonomy by a first pointer (not shown).

The event classes 8 of the event taxonomy 7 are organized according to a hierarchical structure, in particular a tree structure. Event classes 8 of different levels in the tree structure may be related through an inheritance relationship. As a result of the inheritance relationship, each event class stored in a child node comprises the event type attributes of the event class stored in its parent node. The event class stored in the child node may add additional event attributes. Accordingly, the same applies to the object classes of the object taxonomy.

Each class of the first taxonomy or second taxonomy comprises a number of mandatory object type attributes or event type attributes and a number of optional object type attributes or event type attributes, respectively. The set of event classes or object classes is domain-specific and not fixed. A taxonomy lists a set of event classes or object classes. Per class, the set of mandatory attributes and the set of optional attributes are given. A subclass, i.e., a class stored in a child node, may promote optional attributes to become mandatory attributes.

The event type may comprise a name and, if any, a number of second pointers 9 to one or more event classes. In case the event type points to a single event class, the event class may define the name of the corresponding event type. Similarly, the object type may comprise a name and, if any, a number of first pointers to one or more object classes. In case the object type points to a single object class, the object class may define the name of the corresponding object type. In case the event type or object type comprises two or more pointers to event classes or object classes, respectively, the name of the event type or the name of the object type may be defined arbitrarily.

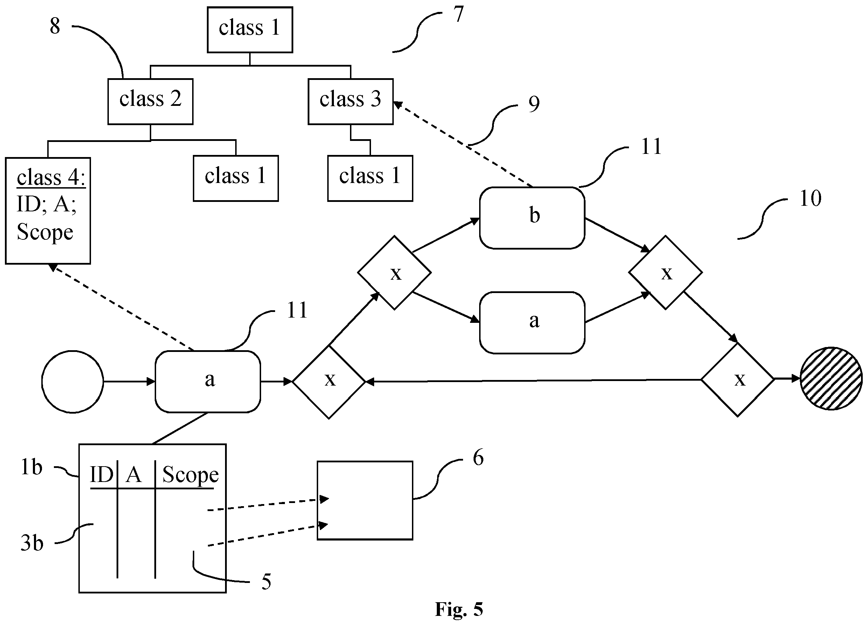

In contrast to scope values which operate at the instance level, taxonomies operate at the type level and represent specialization relations ("is a"). In some embodiments, it may be advantageous to combine the use of scope values and taxonomies, as elaborated below with respect to Fig. 5.

**Fig. 5** shows a schematic representation of scope values for event instances in combination with an event taxonomy.

The example of Fig. 5 is built on the process graph 11 of Fig. 4. In addition to the embodiment represented in Fig. 4, the event instances 3b stored in the second data structure 1b related to event type "a" further comprise a scope attribute 4, in which scope values 5 are stored.

The event class 4 of the event taxonomy 7 enforces which attributes are to be present in the corresponding second data structure 1b of event "a". In other words, a presence of specific scope attributes may be enforced through taxonomies, i.e., the at least one class the respective event type or object type is linked to. For example, an object instance of type "Employee" needs to have a scope attribute in which scope values indicating the corresponding department are to be stored.

In the example of Fig. 5, the event class "class 4" defines the attributes "ID, "A" and "Scope", which are therefore part of the schema for the respective second data structure 1b. The scope value 5 stored for each event instance 3b in the second data structure 1b refers to a node 12 in the emerging hierarchical structure 6 as explained above with respect to Fig. 2.

While taxonomies may be used for aggregations at the type level before a process graph is discovered, the scope attributes enable aggregations at the instance level, i.e., OLAP operations on the object-centric data model and subsequently on the discovered process graph. Both concepts therefore provide a means to generate object-centric data models that are less complex, in particular with respect to the queries required for performing typical process mining tasks. Further, both approaches enable independently and in combination for the first time to adapt the aggregation level in corresponding object-centric data models flexibly.

### List of reference numerals:

- 1a: First data structure
- 1b: Second data structure
- 2: Object type
- 3a: Object instance
- 3b: Event instance
- 4: Scope attribute
- 5: Scope value
- 6: Emerging hierarchical structure
- 7: Second taxonomy
- 8: Class of the second taxonomy
- 9: Second pointer
- 10: Process graph
- 11: Event type
- 12: Node of the emerging hierarchical structure

## Claims

1. Computer-implemented method to generate an object-centric data model of recorded process data, wherein the recorded process data is a multidimensional data set which comprises data recorded during executions from processes and is extracted from at least one external computer system, wherein a process comprises a number of process steps, wherein a number of object instances participate in executing the number of process steps, wherein the method comprises:
- providing a number of first data structures, wherein a number of attributes of each first data structure defines an object type,
- for each object type, determining a number of object instances in the recorded process data and storing each object instance in a record of the first data structure such that each object instance is assigned to exactly one object type,
- providing at least one first taxonomy, wherein each first taxonomy comprises a number of classes, wherein each class defines a number of object type attributes,
- linking each object type a number of classes, wherein each class is assigned to a different first taxonomy such that the number of attributes of the first data structure is defined by the number of classes the respective object type is linked to, and
- generating the object-centric data model based on the number of first data structures.

2. The method of claim 1, further comprising assigning a number of first pointers to the object type, wherein each first pointer refers to a single class of a respective first taxonomy.

3. The method of claim 1, further comprising:
- providing a number of second data structures, wherein a number of attributes of each second data structure defines an event type,
- for each event type, determining a number of process steps in the recorded process data and storing each process step in a record of the second data structure such that each process step is assigned to exactly one event type,
- providing at least one second taxonomy, wherein each second taxonomy comprises a number of classes, wherein each class defines a number of event type attributes,
- linking each event type to a number of classes, wherein each class is assigned to a different second taxonomy such that the number of attributes of the second data structure is defined by the number of classes the respective event type is linked to,
- determining at least one relationship, wherein the relationship links a process step to an object instance, and
- generating the obj ect-centric data model based on the number of first data structures, the number of second data structures and the at least one relationship.

4. The method of claim 3, further comprising assigning a number of second pointers to the event type, wherein each second pointer refers to a single class of a respective second taxonomy.

5. The method of claim 1 or claim 3, wherein the first taxonomy and/or the second taxonomy comprises a tree structure, wherein the tree structure comprises a root node, a number of child nodes of the root node and a number of further child nodes of each child node, wherein in the root node, each child node and each further child node a respective class is stored in the first taxonomy or the second taxonomy, wherein each class stored in a child node or a further child node comprises an attribute in which a reference to its parent class is stored.

6. The method of claim 5, wherein each class stored in a child node or a further child node of the specific first taxonomy and/or the specific second taxonomy is related through an inheritance relationship to its parent class.

7. The method of claim 6, wherein each class of the first taxonomy comprises a number of mandatory object type attributes and a number of optional object type attributes, wherein each class of the second taxonomy comprises a number of mandatory event type attributes and a number of optional event type attributes, wherein each class stored in a child node or a further child node of the respective first taxonomy and/or the respective second taxonomy inherits all attributes of its parent class.

8. The method of claim 1, further comprising storing a scope value in at least one attribute of the first data structure, wherein the scope value comprises a pointer into an emerging hierarchical structure.

9. The method of claim 3 and claim 8, further comprising storing the scope value in at least one attribute of the second data structure.

10. The method of claim 8 or claim 9, wherein the scope value is a string comprising categorical data that is separated by a delimiter.

11. The method of claim 1 or claim 3, further comprising discovering a process graph from the object-centric data model, wherein the process graph is provided for an analysis of the recorded process data.
